(19) **Europäisches Patentamt**
**European Patent Office**
**Office européen des brevets**

(11) **EP 2 567 244 B1**

(12) **FASCICULE DE BREVET EUROPEEN**

(45) Date de publication et mention de la délivrance du brevet:
**09.12.2020 Bulletin 2020/50**

(21) Numéro de dépôt: **11723575.4**

(22) Date de dépôt: **05.05.2011**

(51) Int Cl.:
***G01Q 60/26*** *(2010.01)* ***G01Q 60/28*** *(2010.01)*

(86) Numéro de dépôt international:
**PCT/FR2011/051024**

(87) Numéro de publication internationale:
**WO 2011/138564 (10.11.2011 Gazette 2011/45)**

(54) **PROCEDES DE MESURE ET DE MODIFICATION DE SURFACE PAR MICROSCOPIE A SONDE LOCALE FONCTIONNANT EN MODE CONTINU CURVILIGNE, MICROSCOPE A SONDE LOCALE ET DISPOSITIF PERMETTANT LEURS MISES EN OEUVRE**

MESS- UND OBERFLÄCHENBEARBEITUNGSVERFAHREN DURCH EIN IN KONTINUIERLICHEM KRUMMLINIGEN MODE FUNKTIONIERENDES LOKALSONDENMIKROSKOP, LOKALSONDENMIKROSKOP UND VORRICHTUNG FÜR IHRE ANWENDUNG

METHODS OF MEASUREMENT AND OF MODIFICATION OF A SURFACE THROUGH A LOCAL PROBE MICROSCOPE WORKING IN A CONTINUOUS CURVILINEAR MODE, LOCAL PROBE MICROSCOPE AND DEVICE FOR THEIR REALISATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2010 FR 1053610**

(43) Date de publication de la demande:
**13.03.2013 Bulletin 2013/11**

(73) Titulaires:
• **Centre National de la Recherche Scientifique (C.N.R.S.)**
**75016 Paris (FR)**
• **Université du Mans**
**72085 Le Mans Cédex (FR)**

(72) Inventeurs:
• **NOEL, Olivier**
**F-72190 Neuville sur Sarthe (FR)**
• **MAZERAN, Pierre-Emmanuel**
**F-60200 Compiegne (FR)**
• **NASRALLAH, Hussein**
**F-72000 Le Mans (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**EP-A1- 0 674 170** **JP-B2- 3 226 649**
**US-A1- 2007 272 005** **US-B1- 6 169 281**

• **MAZERAN P-E ET AL: "Normal and lateral modulation with a scanning force microscope, an analysis: Implication in quantitative elastic and friction imaging", TRIBOLOGY LETTERS, BALTZER SCIENCE PUBLISHIERS, NL, vol. 7, no. 4, 1 janvier 1999 (1999-01-01) , pages 199-212, XP002398003, ISSN: 1023-8883, DOI: DOI:10.1023/A:1019142025011**

EP 2 567 244 B1

**Description**

**[Domaine de l'invention]**

L'invention porte sur des procédés de mesure et de modification de surface par microscopie à sonde locale fonctionnant en mode continu curviligne. Elle porte également sur un microscope à sonde locale permettant de mettre en œuvre lesdits procédés de mesure et de modification de surface ainsi que sur un dispositif permettant la mise en œuvre desdits procédés, pouvant être adapté sur tout type de microscope à sonde locale.

**[Art antérieur]**

Contrairement à la microscopie à effet tunnel (ou STM « Scanning Tunneling Microscopy ») qui reste limitée à l'étude des matériaux conducteurs, l'AFM permet non seulement d'étudier des matériaux conducteurs mais aussi des matériaux non-conducteurs tels que les polymères, les céramiques, les matériaux biologiques et ceci dans différents environnements (milieu ambiant, gazeux, liquide, milieu corrosif ou inerte, à différentes températures, à taux d'humidité contrôlé) et sans préparation préalable particulière de l'échantillon.

Depuis son invention en 1986 (Binnig and Al. Phys.Lett.56(9), 930 ; 1986), le microscope à force atomique (ou « AFM » : Atomic Force Microscopy) est devenu une des techniques incontournables pour mesurer des forces avec une résolution du piconewton et/ou pour imager la topographie de la surface d'un échantillon avec une résolution nanométrique.

Le principe de l'AFM repose sur la mesure des différentes forces d'interaction entre une pointe très fine et dont l'extrémité est idéalement atomique fixée à l'extrémité d'un bras de levier appelé cantilever et la surface d'un matériau.

Un AFM opère suivant trois régimes principaux à savoir :

- le mode contact : la pointe est très proche de la surface de l'échantillon (quelques angströms), les forces répulsives dominent du fait de la répulsion stérique ;

- le mode non contact : le cantilever oscille au voisinage de la surface de l'échantillon autour de sa fréquence de résonnance à une amplitude faible de l'ordre de quelques nm. Ce sont les forces attractives qui dominent (forces de Van der Waals, magnétiques, électrostatiques...) ;

- le mode intermittent (ou mode tapping) : le cantilever oscille autour de sa fréquence de résonnance à une amplitude suffisamment grande de l'ordre de 20nm ; la pointe traverse le champ attractif puis répulsif de la surface de l'échantillon et ne vient donc que périodiquement en contact avec la surface de l'échantillon.

Les interactions de la pointe avec l'échantillon induisent une variation de l'amplitude de vibration ou une déflexion très faible (de l'ordre de quelques picomètres jusqu'à quelques centaines de nanomètres au plus) du cantilever. Cette déflexion est généralement détectée par un système optique constitué d'un faisceau laser venant se réfléchir sur l'extrémité du cantilever et dont le parcours est guidé à l'aide de miroirs, et capté ensuite par un photodétecteur.

Ainsi, lorsqu'une surface est balayée par une pointe, les variations instantanées des amplitudes de vibration ou des déflexions normales et/ou torsions latérales du cantilever sont détectées à l'aide du système optique, et il est possible de réaliser l'image topographique de la surface.

Dans la présente invention, l'ensemble constitué par le cantilever et la pointe est appelé par la suite « sonde ». Le cantilever est incliné par rapport au plan horizontal de l'échantillon et la sonde est fixée au microscope via un porte-sonde.

Les termes « surface » et « surface d'échantillon » sont utilisés indifféremment dans la présente invention.

L'échantillon à analyser est placé sur un porte-échantillon.

Selon les configurations de l'AFM, le porte-sonde ou le porte-échantillon sont mis en mouvement à l'aide de trois actionneurs (typiquement des céramiques piézoélectriques) constitués par un tube rigide sur lesquels on applique des tensions électriques pour obtenir des déplacements dans les différentes directions de l'espace.

Selon l'invention, le référentiel orthonormé (XYZ) est utilisé dans lequel les axes X, Y et Z sont définis comme étant les axes de déplacements de l'actionneur permettant le déplacement du porte-sonde ou du porte-échantillon.

Il est fait référence aux coordonnées (x,y,z) du référentiel (X,Y,Z) pour définir des positions dans l'espace.

Il existe différentes configurations commerciales du microscope à force atomique : soit le porte-sonde est immobile tandis que le porte-échantillon est mis en mouvement soit le porte-échantillon est immobile tandis que le porte-sonde est en mouvement.

De manière classique, les mesures AFM sont obtenues par deux modes de fonctionnement :

- le mode imagerie dans lequel la sonde balaye la surface de l'échantillon horizontalement dans le plan (XY). Ce mode opératoire permet d'accéder à des images caractérisant une grandeur, généralement la topographie, en fonction de la position x, y de la surface de l'échantillon. Il est également possible d'accéder à des grandeurs physiques telles que par exemple, la topographie, les forces de frottement au cours d'un balayage cyclique latéral à une dimension (selon la direction X ou Y) sur des distances nanométriques voire micrométriques ;

- le mode spectrographie de force, permettant de générer une courbe de force « approche-retrait » dans lequel on impose à la sonde des cycles d'approche et de retrait par rapport à la surface de l'échantillon selon la direction Z de l'actionneur, tout en mesurant l'interaction entre la pointe et la surface de l'échantillon. En AFM, un spectre de force représentant la valeur de la force d'interaction entre la pointe et l'échantillon en fonction du déplacement de l'actionneur selon l'axe Z est obtenu. Ce mode permet d'avoir accès localement aux forces d'adhésion et/ou d'attraction, ainsi qu'aux propriétés élastiques de l'échantillon.

Ce mode est utilisé dans la recherche biomédicale afin de mesurer les interactions entre molécules (ligand/récepteur, anticorps/antigène, ADN/protéine). US 6 169 281 B1 décrit un microscope à sonde de balayage dont la pointe de la sonde est balayée le long d'un axe X et/ou Y. EP 0 674 170 A1 décrit un appareil pour produire en temps réel des données de positionnement de l'emplacement de la sonde de détection d'un microscope à balayage à effet tunnel, un microscope à force atomique, ou capacitif ou d'un système de champ de détection magnétique. US 2007/272005 A1 décrit un procédé permettant d'améliorer la précision d'un microscope à sonde de balayage. MAZERAN P-E ET AL: "Normal and latéral modulation with a scanning force microscope, an analysis: Implication in quantitative elastic and friction imaging", TRIBOLOGY LETTERS, BALTZER SCIENCE PUBLISHIERS, NL, vol. 7, no. 4, 1 janvier 1999, pages 199-212, concerne un microscope à sonde de balayage. JP 3 226649 B2 décrit un microscope à force atomique qui peut mesurer les forces de frottement en fonction d'un mouvement latéral le long d'un axe X ou Y.

**[Problème technique]**

En mode imagerie ou spectrographie de force, les systèmes classiques présentent des inconvénients.

En effet, lorsque la pointe entre en contact avec la surface de l'échantillon, un nano ménisque de condensation capillaire dû à l'humidité de l'air et à l'hydrophilie des surfaces peut se former entre la pointe et la surface, typiquement pour des temps de contact proches et au-delà de la milliseconde. La dépression de Laplace dans ce ménisque de condensation capillaire génère une force d'adhésion de l'ordre de plusieurs dizaines de nN qui vient s'ajouter à la force d'appui générée par la flexion du cantilever. Il en résulte qu'il est quasiment impossible dans le mode dit contact de travailler avec une force d'appui inférieure à la force capillaire ce qui rend ce mode d'imagerie particulièrement dégradant pour la surface de l'échantillon.

De plus la force d'adhésion mesurée lors des spectres de force est liée non seulement aux forces d'interaction entre la pointe et l'échantillon mais aussi à la force d'adhésion capillaire. Il n'est donc pas possible de mesurer certaines forces d'interactions telles que les forces magnétiques, de van der Walls ou électrostatiques sans être perturbé par ces forces capillaires.

De plus, dans le cas de mesure d'une grandeur donnée, en fonction de la position x-y, le balayage cyclique imposé au porte-sonde (ou au porte-échantillon) ne permet pas à ce dernier de se déplacer à une vitesse linéaire constante, notamment aux points de rebroussement du cycle dû à un arrêt momentané avant le retour. Ainsi, les mesures de cette grandeur ne se font pas à vitesse constante au cours de la mesure, l'état stationnaire est donc quelquefois impossible à observer. A titre d'exemple, lors des mesures de force de frottement, un ménisque de condensation capillaire est susceptible de se développer lors du temps d'arrêt et de disparaître lors du glissement générant une force totale non constante et altérant ainsi la mesure.

Par conséquent, un environnement liquide ou en humidité contrôlée, ou en ultravide est nécessaire afin de neutraliser les forces d'interaction supplémentaires dues à la formation du ménisque de condensation capillaire.

Il serait donc avantageux de pouvoir réaliser des mesures en s'affranchissant du phénomène de condensation capillaire tout en travaillant dans des conditions ambiantes.

**[Brève description de l'invention]**

Les présents inventeurs ont trouvé que ceci était possible en imposant lors du procédé de mesure un déplacement relatif continu curviligne de la sonde par rapport à la surface de l'échantillon à analyser, échantillon qui est disposé sur le porte-échantillon.

Le mouvement relatif continu curviligne est uniforme. Les mesures peuvent ainsi être réalisées à vitesse constante sans temps d'arrêt, c'est-à-dire en atteignant un état stationnaire.

Selon l'invention, par mouvement « continu », on entend un mouvement qui ne subit pas de temps d'arrêt.

Par mouvement « uniforme », on entend un mouvement dont la vitesse ne subit pas de variations brutales (vitesse dérivable en tout point).

Par mouvement « curviligne » ou mode « curviligne », on entend tout mouvement généré par l'application de deux tensions harmoniques Vx(t) et Vy(t) (ou encore appelées tensions X et Y) composées de tensions sinusoïdales de fréquences f et de ses harmoniques i.f (avec i entier), d'amplitude respectives $A_i$ et $A'_i$ ; lesdites harmoniques des tensions X et Y étant déphasées l'une par rapport à l'autre d'un angle $\varphi$. Selon l'invention, les tensions sont définies de la manière suivante :

$$Vx(t) = \sum_{i=1}^{n} A_i \cos(i.\omega.t + \Phi_i)$$

$$Vy(t) = \sum_{i=1}^{n} A'_i \cos(i.\omega.t + \Phi'_i)$$

Où $\omega$ est une pulsation égale à $2\pi$ multiplié par la fréquence f;

$A_i$ et $A'_i$ sont les amplitudes respectives des différentes harmoniques des tensions Vx(t) et Vy(t).

$\Phi_i$ et $\Phi'_i$ sont les déphasages respectifs des harmoniques i des tensions Vx(t) et Vy(t).

Le mouvement circulaire ou le mouvement elliptique sont des cas particuliers du mouvement curviligne.

Par mouvement « relatif » entre le porte-sonde et le porte-échantillon, on entend soit un mouvement du porte-sonde alors que le porte-échantillon est immobile, soit un mouvement du porte-échantillon alors que le porte-sonde est immobile.

Par abus de langage, on parlera parfois de déplacement de la sonde et de déplacement de l'échantillon.

Dans le cadre de la présente invention, on considère que l'échantillon à analyser présente une surface sensiblement plane à l'échelle macroscopique. Cet échantillon présente bien entendu une rugosité à l'échelle nanométrique.

L'invention sera mieux comprise à la lecture de la description qui va suivre faite en se référant aux dessins, sur lesquels :

- la figure 1 est une illustration schématique du principe général de fonctionnement d'un AFM conventionnel dans lequel le porte sonde est immobile et les déplacements selon les axes X,Y et Z se font au niveau du porte-échantillon ;
- les figures 2b et 2c sont des courbes représentatives des tensions de pilotage possibles selon l'invention en fonction du temps entraînant un mouvement circulaire à vitesse constante (figure 2a) ;
- les figures 3b et 3c sont des courbes représentatives des tensions de pilotage possibles selon l'invention en fonction du temps entraînant un mouvement elliptique à vitesse constante (figure 3a) ;
- les figures 4b et 4c sont des courbes représentatives des tensions de pilotage possibles selon l'invention en fonction du temps entraînant un mouvement curviligne à vitesse constante (figure 4a) ;
- la figure 5 représente le schéma de principe du dispositif de l'invention et sa connexion à un AFM ;
- la figure 6 représente la déflexion du cantilever en fonction du déplacement vertical de l'actionneur et illustre l'exemple 1 de la présente invention ;
- les figures 7a et 7b représentent l'acquisition simultanée de la force d'adhésion (valeur minimale de la courbe 7a) et de la force de frottement (la pente indiquée sur la figure 7b donne accès à la valeur du coefficient de frottement) à une vitesse de glissement donnée et illustrent l'exemple 2 de la présente invention.
- la figure 8 est une image topographique mettant en évidence la modification de la surface par usure liée à l'application du mouvement curviligne continu selon l'invention.

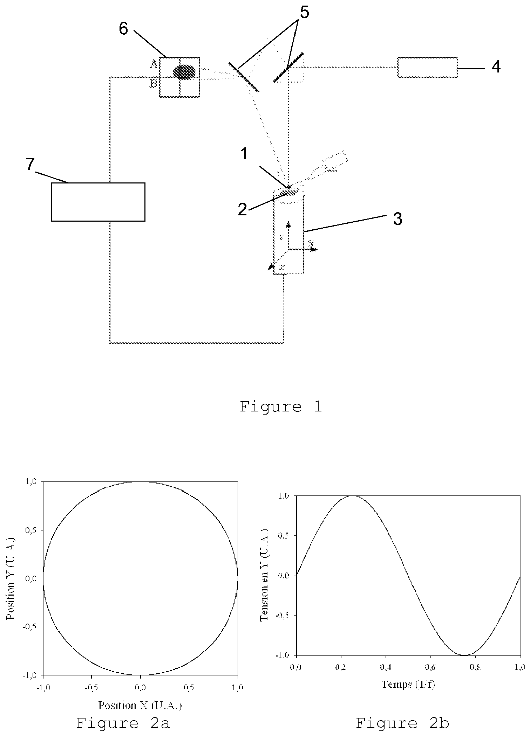

Le principe de l'AFM (figure 1) consiste à balayer la surface d'un échantillon 1 avec la sonde 2, au moyen de la céramique piézoélectrique 3. La mesure des forces d'interaction exercées sur la pointe de la sonde est réalisée par l'intermédiaire d'un faisceau laser 4 focalisé au dessus de la pointe. La réflexion de ce signal laser par des miroirs 5 est ensuite collectée sur un détecteur constitué de quatre cellules photoélectriques 6. C'est cette position sur le détecteur qui va permettre de quantifier la déflexion normale ou latérale du cantilever avec une résolution de l'ordre du pico-newton. Cette position va servir de référence pour détecter ou bien des forces attractives ou des forces répulsives ou encore des forces de frottement par le biais des déplacements latéraux du spot sur les cellules.

Une boucle de rétroaction 7 permet de réaliser l'image topographique de la surface, soit en maintenant la sonde à une distance constante par rapport à la surface de l'échantillon, soit en imposant une interaction constante du cantilever, pendant le balayage de la surface. Il est également possible de supprimer le balayage horizontal (suivant les axes X et Y) et de réaliser un balayage vertical (selon l'axe Z) c'est à dire des cycles d'approche et de retrait du porte-sonde par rapport à l'échantillon. Dans ce mode de mesure de forces, sans balayage horizontal, la boucle de rétroaction n'est pas utilisée. La déflexion du cantilever est ainsi mesurée en un point donné de l'échantillon à différentes distances de séparation et plus précisément pour un déplacement de l'actionneur dans la direction Z.

Lors de mesures classiques, le plan de déplacement XY de l'actionneur est légèrement incliné par rapport à la surface de l'échantillon, autrement dit le balayage horizontal ne se fait pas dans le plan de l'échantillon.

Les appareils de l'état de la technique peuvent être pourvus d'un module d'accès aux signaux permettant un pilotage spécifique de la céramique piézoélectrique, dans les trois directions X,Y,Z de l'espace.

En fonction du type de configuration de l'AFM, les moyens permettant le déplacement sont les actionneurs piézoélectriques du porte-sonde ou du porte-échantillon.

Les inventeurs ont découvert que le fait de générer un mouvement relatif curviligne uniforme entre le porte-sonde et l'échantillon permettait d'acquérir les données à vitesse de déplacement constante, sans accélération ni décélération, sans temps d'arrêt et sans variation brusque de la direction de déplacement tout au long de la mesure.

Un objet de l'invention est donc un procédé de mesure par microscopie à force atomique, dans lequel le porte-échantillon et le porte-sonde sont en mouvement relatif continu curviligne, selon la revendication 1. L'objet de l'invention est aussi un microscope à force atomique selon la revendication 6.

Ce procédé permet donc d'éviter les phénomènes induits par le changement brutal de direction de déplacement rencontré dans le mode classique de balayage par va et vient. A titre d'exemple, en mode contact, le balayage en mode va et vient peut engendrer lors du temps nécessaire à l'inversion de la direction de balayage un changement brutal des contraintes de cisaillement, des déformations élastiques et plastiques, de la température de contact, des forces d'adhésion, etc... résultant en un état non-stationnaire de l'interaction entre la sonde et l'échantillon.

De plus, le mode curviligne lorsqu'il est utilisé sans rétroaction permet d'atteindre des vitesses de déplacement dans le plan XY largement supérieures, avec un facteur d'au moins trois décades, aux valeurs actuellement disponibles en jouant sur la possibilité de travailler avec des tensions d'alimentation de l'actionneur à hautes fréquences. Dans le dispositif développé par les inventeurs, il est possible d'atteindre des vitesses de l'ordre de 100 mm.s$^{-1}$ mais des vitesses encore plus importantes peuvent être atteinte en utilisant des actionneurs piezo-électriques capables de générer des déplacements à très hautes fréquences (MHz aux GHz). Ceci est particulièrement pertinent dans le cadre des modifications de surface décrite dans l'invention car il est possible de réaliser ces modifications à des vitesses bien plus rapides que dans l'état de l'art.

La vitesse importante du mouvement continu curviligne de la sonde va empêcher la formation du ménisque de condensation capillaire et ainsi permettre de mesurer simultanément les forces d'interaction en fonction de la vitesse de glissement en s'affranchissant des différents problèmes évoqués précédemment.

Le procédé selon l'invention est appliqué à un microscope à force atomique. Il peut être aussi appliqué à tout microscope à sonde locale (ou champ proche) tel que le STM (Scanning Tunneling Microscopy) ou le SNOM (Scanning Near Optical Microscopy) et tous les membres de la famille des SPM (Scanning Probe Microscopy).

**[Description détaillée de l'invention]**

**Procédé**

Ainsi, l'invention concerne un procédé de mesure par microscopie à force atomique selon la revendication 1 comportant les étapes suivantes :

(a) approcher d'une surface d'un échantillon à analyser une pointe d'une sonde pour microscopie à force atomique ;

(b) mettre en mouvement relatif continu curviligne, à une vitesse dérivable en tout point et sans temps d'arrêt tout au long de la mesure, la surface de l'échantillon par rapport à la pointe tout en appliquant à ladite surface un autre mouvement relatif selon l'axe Z, ledit mouvement étant sensiblement normal à la surface de l'échantillon;

(c) détecter les forces d'interaction s'exerçant entre ladite surface à analyser et ladite pointe pour microscopie à force atomique permettant d'accéder aux forces d'adhésion lors du retrait de la pointe vis-à-vis de la surface ou inversement et/ou aux forces de frottement en fonction des forces normales imposées lors des cycles d'approche-retrait et lorsque la pointe est en contact avec la surface de l'échantillon.

Il est ainsi possible d'établir des courbes de forces grâce aux mesures des forces d'adhésion en s'affranchissant des forces liées au ménisque de condensation capillaire.

Par ailleurs, il est également possible de faire varier la vitesse de glissement, c'est-à-dire la vitesse de déplacement de la surface par rapport à la pointe, et ainsi mesurer la force d'adhésion en fonction de la vitesse de glissement.

De plus, le procédé décrit précédemment met en œuvre de manière très avantageuse le couplage entre le mouvement continu relatif curviligne dans le plan (XY) de déplacement de l'actionneur et le mouvement relatif selon l'axe Z de déplacement de l'actionneur rendant ainsi possible la détermination en une seule mesure d'un coefficient de frottement grâce aux mesures simultanées des forces de frottement pour différentes valeurs de forces normales, contrairement au procédé actuel qui nécessite de multiples mesures afin d'accéder au coefficient de frottement. En effet, dans la configuration conventionnelle, une seule mesure de force de frottement est possible pour une force normale appliquée donnée.

Dans le procédé de l'invention, la variation de la force normale est simplement induite par l'approche et le retrait de la pointe sur la surface de l'échantillon et les forces de frottement générées par le mouvement relatif lorsque la sonde et l'échantillon sont en contact sont mesurées simultanément grâce au mouvement uniforme curviligne. Un seul cycle d'approche-retrait est donc nécessaire afin de tracer la droite représentant les forces de frottement en fonction des forces normales imposées et d'en déduire le coefficient de frottement.

D'un point de vue scientifique, il devient donc possible d'établir une corrélation directe entre la variation des coefficients de frottement, de la force d'adhésion et la présence d'un ménisque de condensation capillaire. Pour se faire, il suffit donc de réaliser cette mesure à différentes vitesses de glissement et de mesurer les coefficients de frottement et les forces d'adhésion.

Il est également possible selon l'invention de réaliser une cartographie des courbes de forces, de frottement ou des coefficients de frottement en ajoutant les étapes suivantes aux procédés décrits précédemment :

(d) après l'étape c) déplacer la sonde ou l'échantillon à une autre coordonnée (x,y) à l'aide des actionneurs piézoélectriques ;
(e) répéter les étapes a) b) et c)
(f) éventuellement répéter les étapes (d) et (e)

Selon un mode de réalisation, le porte-échantillon et le porte-sonde sont en mouvement continu relatif curviligne uniforme pendant les procédés de mesure.

Selon un mode préféré de réalisation, le mouvement curviligne est un mouvement circulaire.

Selon un autre mode de réalisation, la surface de l'échantillon est redressée selon les directions X et Y de manière à ce que la surface de l'échantillon soit parallèle au plan de déplacement de l'actionneur.

Selon un autre mode de réalisation, la sonde vibre autour de sa fréquence de résonance durant toute la mesure (mode non-contact ou contact intermittent).

Selon l'invention, l'échantillon à analyser peut être conducteur ou isolant.

Lors des mesures, au moins la surface à analyser et la pointe pour microscopie à sonde locale, notamment pour microscopie à force atomique peuvent être immergées dans un milieu liquide.

Les mesures obtenues à l'aide des procédés décrits précédemment vont permettre un développement rapide d'une métrologie rigoureuse et reproductible et pourraient être incontournables dans de nouvelles normes de mesures à l'échelle nanométrique.

Les procédés de l'invention permettent également de provoquer des modifications de surface en mettant en mouvement relatif curviligne relatif la pointe par rapport à la surface à modifier pendant des durées importantes et en faisant varier ou non les forces normales appliquées selon la direction Z tout au long du procédé de modification de surface.

## Microscope à force atomique

Un autre objet de l'invention concerne un microscope à force atomique selon la revendication 6 qui permet de mettre en œuvre les procédés décrits précédemment.

Conformément à l'invention, le microscope à force atomique comprend une sonde constituée d'un cantilever et d'une pointe, ladite sonde étant reliée au microscope via un porte-sonde, un porte-échantillon et des moyens permettant le déplacement relatif du porte-échantillon par rapport au porte-sonde. Lors de la mesure, les moyens de déplacement génèrent le mouvement relatif continu curviligne, à une vitesse dérivable en tout point et sans temps d'arrêt tout au long de la mesure, entre le porte-échantillon et le porte-sonde, ledit microscope étant configuré pour détecter les forces d'interaction s'exerçant entre la surface de l'échantillon à analyser et ladite pointe pour microscopie à force atomique permettant d'accéder aux forces d'adhésion lors du retrait de la pointe vis-à-vis de la surface ou inversement et/ou aux forces de frottement en fonction des forces normales imposées lors des cycles d'approche-retrait et lorsque la pointe est en contact avec la surface de l'échantillon.

L'invention peut s'appliquer quelque soit la configuration du microscope à sonde locale. Autrement dit, lesdits moyens de déplacement du microscope à sonde locale de l'invention permettent de générer le mouvement curviligne du porte-échantillon ou bien du porte-sonde.

Le microscope à sonde locale comprend également des moyens de déplacement permettant de générer le mouvement relatif selon l'axe Z entre la sonde et le porte-échantillon, ledit mouvement étant normal à la surface libre du porte-échantillon; ce qui permet d'effectuer des cycles d'approche-retrait tout en balayant la surface de l'échantillon à analyser d'un mouvement continu curviligne.

Comme évoqué précédemment, il est ainsi possible avec le microscope à force atomique de l'invention, pour une même vitesse de glissement en mode curviligne, de mesurer simultanément les forces d'adhésion et les forces de frottement en fonction des différentes forces normales induites lors du contact sonde-échantillon et de déterminer ainsi les coefficients de frottement.

L'électronique associée à un AFM du commerce permet entre autre de commander l'axe Z, et permet ainsi de faire varier la force normale appliquée par la sonde sur l'échantillon, afin de réaliser des courbes de force.

Cette électronique peut être utilisée dans le microscope à force atomique selon l'invention.

Par conséquent, le microscope à force atomique de l'invention permet non seulement de mettre en œuvre les procédés de mesure en mode continu curviligne sans approche-retrait (mesure des forces de frottement) mais aussi les procédés de mesure en mode continu curviligne avec approche-retrait (mesures des forces d'adhésion ou mesures simultanées des forces d'adhésion et des forces de frottement en fonction des forces normales) tout en s'affranchissant du phénomène de condensation capillaire ou de toutes modifications de la nature du contact inhérent à des temps d'arrêt lors de la mesure.

Selon un autre mode de réalisation, le microscope à force atomique de l'invention permet de redresser l'échantillon afin que le mouvement continu curviligne se fasse dans le plan de l'échantillon, autrement dit que le mouvement continu curviligne ne génère pas de modifications de la distance selon l'axe Z entre le porte-échantillon et le porte-sonde. L'interaction entre la sonde et l'échantillon (flexion du cantilever par exemple) sera donc constante. Ceci permet de s'affranchir des variations d'interaction qui entraînent des oscillations sur le tracé des courbes.

Différents moyens sont possibles afin de redresser l'échantillon :

- un redressement mécanique est réalisé grâce à une table de positionnement micrométrique incluant des redressements angulaires en X et Y ; ou
- le système d'asservissement est utilisé afin de maintenir une hauteur constante ; ou encore
- une tension est envoyée sur l'axe Z sur l'actionneur afin de générer un déplacement selon l'axe Z compensant l'inclinaison de l'échantillon, ladite tension $V_z$ étant égale à la somme de deux tensions harmoniques similaires aux tensions $V_x$ et $V_y$ envoyées à l'actionneur dans les axes X et Y mais d'amplitudes différentes et étant définie de la façon suivante : $Vz(t)=aVx(t)+bVy(t)$ où a et b sont des coefficients.

Dans un mode de réalisation particulier, les moyens de déplacements sont les actionneurs piézoélectriques du porte-sonde ou du porte-échantillon en fonction de la configuration du microscope.

Comme dans les appareillages classiques, le microscope selon l'invention peut-être pourvu d'un module d'accès aux signaux permettant un pilotage spécifique de la céramique piézoélectrique dans les 3 directions X,Y,Z.

La présente invention exploite de manière très avantageuse cette possibilité afin de générer le mouvement relatif continu curviligne entre la sonde et l'échantillon par l'application sur les moyens de déplacements de deux tensions harmoniques Vx(t) et Vy(t) (ou encore appelées tensions X et Y) composées de tensions sinusoïdales de fréquences f et de ses harmoniques i.f (avec i entier), d'amplitude respectives $A_i$ et $A'_i$ ; lesdites harmoniques des tensions X et Y étant déphasées l'une par rapport à l'autre d'un angle $\varphi$. Selon l'invention, les tensions sont définies de la manière suivante :

$$Vx(t) = \sum_{i=1}^{n} A_i \cos(i.\omega.t + \Phi_i)$$

$$Vy(t) = \sum_{i=1}^{n} A'_i \cos(i.\omega.t + \Phi'_i)$$

Où $\omega$ est une pulsation égale à $2\pi$ multiplié par la fréquence f;
$A_i$ et $A'_i$ sont les amplitudes respectives des différentes harmoniques des tensions Vx(t) et Vy(t).
$\Phi_i$ et $\Phi'_i$ sont les déphasages respectifs des harmoniques i des tensions Vx(t) et Vy(t).

Selon un mode de réalisation, il est possible de faire varier la vitesse de déplacement en jouant sur la fréquence et/ou l'amplitude des tensions ou couples de tensions.

Selon un autre mode de réalisation, les tensions délivrées sont des tensions sinusoïdales simples.

Par ailleurs, il est possible d'appliquer une composition optimale des tensions de commande sur chacun des axes. En effet, à titre d'exemple, en considérant l'axe X, la composition de deux tensions de valeurs égales et opposées respectivement pour -X et +X, permet de maximiser un déplacement sur cet axe. Ainsi, l'application d'une tension de +10 Volts à la céramique piézoélectrique commandant les déplacements suivant l'axe [-X ; +X] et appliquée en -X et X, génère un déplacement suivant [-X ; +X] correspondant à une tension de 20 Volts appliquée uniquement en X sur la céramique piézoélectrique.

C'est pourquoi, selon un mode de réalisation préféré, le mouvement relatif continu curviligne entre la sonde et l'échantillon est généré par l'application sur les moyens de déplacements de deux couples de tensions électriques harmoniques en opposition de phase [-X et +X] et [-Y et +Y] composés de tensions sinusoïdales de fréquences f et de ses harmoniques i.f (avec i entier), d'amplitudes respectives $A_i$ et $A'_i$, les dites harmoniques des couples [-X et +X] et [-Y et +Y] étant déphasées d'un angle $\varphi$.

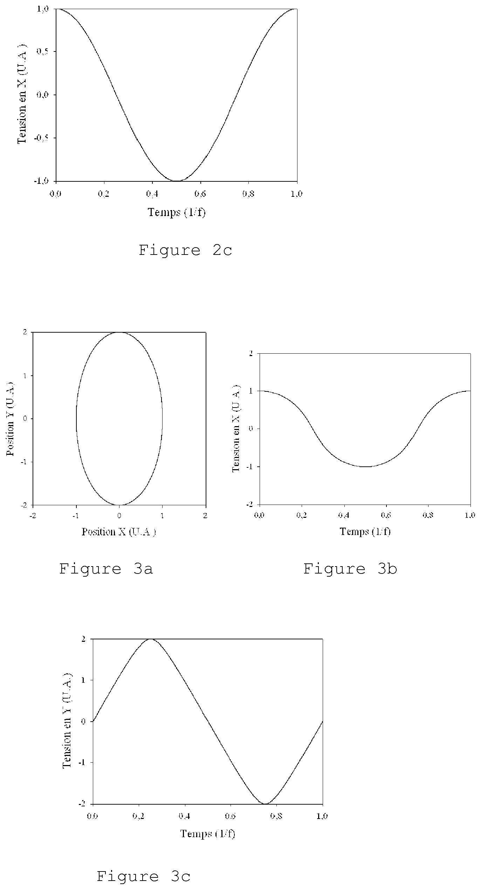

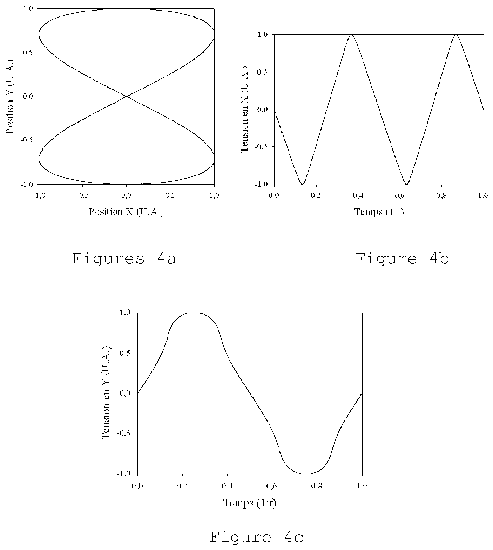

Des tensions sinusoïdales de pilotage sont illustrées sur les figures 2, 3 et 4 permettant de générer respectivement des déplacements circulaires, elliptiques et curvilignes à vitesse constante.

Les amplitudes des tensions X, Y ou couples de tensions à délivrer sont nécessairement strictement supérieures à 0V et inférieures à la tension nominale applicable aux céramiques piézoélectriques.

De manière préférée, les amplitudes $A_1$ et $A'_1$ de la première harmonique des tensions X, Y ou des couples de tensions [-X ; +X] et [-Y ; +Y] sont comprises entre 0.1V et 30V et de manière particulièrement préférée entre 5V et 15V.

Selon l'invention les fréquences f de la première harmonique des tensions X, Y ou couples de tensions [-X ; +X] et [-Y ; +Y] à délivrer sont strictement supérieures à 0 Hz et inférieures au double de la première fréquence de résonance de l'actionneur piézoélectrique, de manière préférée, elles sont comprises entre 10Hz et 1000Hz.

Selon l'invention, l'angle $\varphi$ est compris entre 0,1° et 360°[$2\pi$] (modulo $2\pi$).

Selon un mode préféré de l'invention, les tensions X, Y ou les couples de tensions [-X ; +X] et [-Y ; +Y] sont composés d'une seule harmonique qui présente la même amplitude, la même fréquence et déphasées d'un angle $\varphi$ égal à $\pi/2$[$2\pi$], générant ainsi un mouvement circulaire.

Selon l'invention, le déplacement relatif selon l'axe Z est généré par l'application sur l'actionneur piézoélectrique d'une tension triangulaire.

La vitesse de déplacement selon l'axe Z dépendra de la fréquence et de l'amplitude de ladite tension.

La présente invention présente donc de nombreux avantages techniques et économiques.

En effet, le microscope à force atomique de l'invention permet de mettre en œuvre des procédés de mesures de forces locales à une échelle nanométrique avec une vitesse de déplacement rigoureusement constante et pour des valeurs inégalées proches ou similaires à celles observées en réalité dans le cadre des applications de hautes technologies (microsystèmes électromécaniques, disques durs, nanosystèmes, etc...).

**Dispositif adaptable**

Un autre objet de l'invention concerne un dispositif adaptable à tout type de microscope à force atomique selon la revendication 11 permettant la mise en œuvre du microscope à force atomique tel que décrit précédemment, qui comprend des moyens de contrôle desdits moyens permettant le déplacement.

Lesdits moyens de contrôle sont constitués par l'application des tensions sinusoïdales harmoniques définies précédemment dans le cadre du microscope à sonde locale.

Un tel dispositif peut être directement connecté et adapté à tout type de microscope à sonde locale présent sur le marché.

Ledit dispositif comporte les éléments suivants :

-   un ordinateur doté d'une carte permettant de générer des tensions numériques et d'un logiciel permettant de contrôler les paramètres des tensions générées et de les faire varier selon les besoins de l'utilisateur pour générer les mouvements curvilignes continus (A) ;
-   un convertisseur numérique-analogique (B) ;
-   éventuellement un inverseur de tension (C) dans le cas où l'on applique les couples de tensions [-X ; +X] et [-Y ; +Y] ;
-   un module d'accès aux signaux ou tout autre système permettant d'appliquer des tensions électriques aux actionneurs piézoélectriques (D) ;
-   un détecteur synchrone (E) ;
-   éventuellement une carte de pilotage (F) permettant de piloter le détecteur synchrone et de récupérer les valeurs mesurées.

Selon un mode de réalisation, les éléments (A), (B), et (C) peuvent être avantageusement remplacés par un ou plusieurs générateurs de tension multi-sorties permettant de générer plusieurs tensions déphasées les unes par rapport aux autres et de fixer les amplitudes et les fréquences de celles-ci.

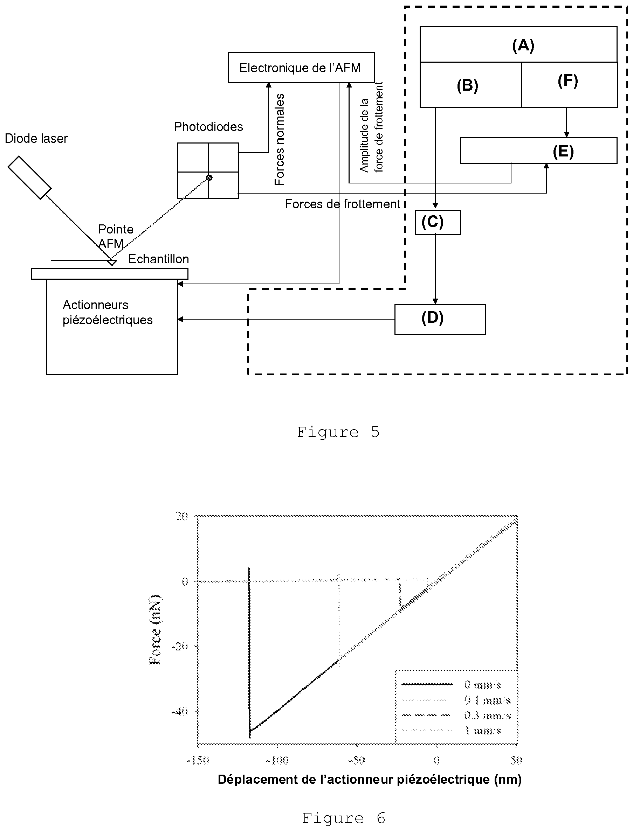

Le montage de la figure 5 comporte un tel dispositif et est susceptible de générer un mode curviligne, et de mesurer par exemple simultanément la force de frottement en fonction de la force normale appliquée et la force d'adhésion en fonction de la vitesse de glissement et d'établir des courbes de frottement ou des courbes de force.

Dans la présente invention, un ordinateur muni d'un logiciel permettant de générer des tensions déphasées numériques virtuelles est utilisé. Le logiciel nécessite des drivers permettant de communiquer avec les différents composants du dispositif.

On peut par exemple utiliser le logiciel Labview afin de générer un couple de tensions sinusoïdales virtuelles de 10V à 100Hz.

Lesdits signaux numériques sont ensuite convertis en signaux analogiques grâce à un convertisseur numérique-analogique B.

Le convertisseur numérique-analogique est choisi en fonction de l'amplitude de la tension à délivrer.

On peut par exemple utiliser comme convertisseur numérique-analogique une carte DAC NI-PCI 6731 de National Instruments.

Selon un mode de réalisation particulier du dispositif selon l'invention, il est également possible d'utiliser un générateur de tensions analogiques à la place du logiciel permettant de générer des tensions numériques virtuelles et du convertisseur numérique-analogique.

Selon un mode de réalisation préféré, les signaux analogiques sortant du convertisseur B sont ensuite envoyés dans un inverseur de tension C permettant la génération de quatre tensions déphasées en [-X ; +X] et [-Y ; +Y].

Ces tensions de pilotage déphasées sont à l'origine des vitesses de déplacement importantes que peut atteindre la sonde ou le porte-échantillon. En effet, en considérant une tension de pilotage dont on fixe par exemple la fréquence et dont on augmente l'amplitude, afin de garder une fréquence constante, la vitesse de rotation doit nécessairement augmenter.

Ces tensions sont ensuite envoyées via le module d'accès aux signaux (D) ou tout autre système permettant d'appliquer des tensions aux contrôleurs piézoélectriques de la sonde ou du porte-échantillon afin de générer des déplacements curvilignes selon les axes X et Y.

Le signal de l'amplitude des forces normales est directement envoyé dans l'électronique de l'AFM qui permet la conversion des données analogiques en données numériques afin d'exploiter les résultats sous forme de graphiques ou de cartographies avec des niveaux de gris ou de couleurs.

Quant au signal des forces de frottement, il est envoyé sur le détecteur synchrone (E) qui calcule l'amplitude de la force de frottement à la fréquence de déplacement ou de toutes autres harmoniques de la fréquence de déplacement de la pointe ou du porte-échantillon. Ledit signal est ensuite injecté dans l'électronique de l'AFM et permet la représentation des forces de frottement en fonction du déplacement de la céramique piézoélectrique.

Selon l'invention, une carte de pilotage (E) est utilisée afin de récupérer les grandeurs mesurées par le détecteur synchrone.

La carte de pilotage peut également servir à régler les paramètres du détecteur synchrone lorsque ces derniers ne sont pas réglés manuellement.

La carte de pilotage nécessite un logiciel de pilotage et des drivers.

Par exemple, on peut utiliser une carte de pilotage type PCI-GPIB NI 488.2.

Selon un mode de réalisation, les mesures de forces d'adhésion ou de frottement sont enregistrées sur une grille XY et permettent ainsi d'acquérir une collection de spectres et d'établir une cartographie en mode force.

Par ailleurs, les nombreux avantages que permet le mode continu curviligne uniforme exposé dans la présente invention le rendent tout à fait approprié à l'étude des interactions entre molécules telles que les interactions ligand/récepteur, anticorps/antigène, ADN/protéine.

C'est pourquoi, un autre objet de l'invention concerne l'utilisation des procédés de mesure de l'invention dans les domaines de la métrologie, des sciences des matériaux, de la biologie, de la biochimie, des biotechnologies, des micro-nanosciences et des micro-nanotechnologies.

Par ailleurs, le mode continu curviligne uniforme permet également d'accéder à des paramètres d'usure tels que le coefficient d'Archard en mettant la pointe en contact avec la surface d'un échantillon en mouvement relatif continu curviligne pendant des durées importantes et en faisant varier les forces normales. Il est alors possible de mesurer les volumes usés en fonction du temps et des différentes forces normales.

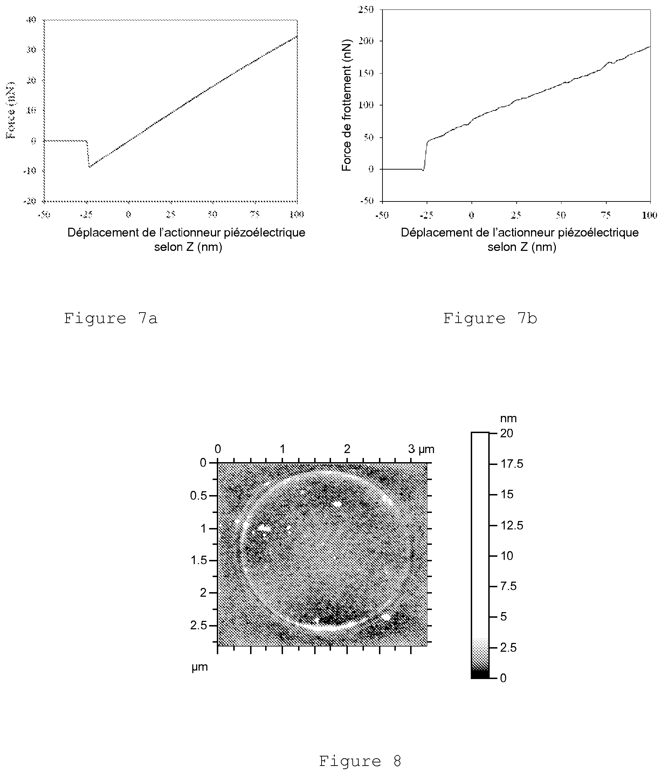

Un tel phénomène d'usure de la surface est illustré par la figure 8.

Un autre objet de l'invention concerne donc l'utilisation du microscope à sonde locale de l'invention dans le domaine de l'usure et de l'abrasion de surface.

Dans le cas de procédé de modification de surface (usure, abrasion, lithographie, oxydation, dépôt électrochimique, etc...), le microscope à sonde locale de l'invention peut comporter un actionneur piézoélectrique supplémentaire de manière à ce qu'un actionneur soit consacré à positionner la sonde à l'emplacement où la modification doit être réalisée et que le second actionneur génère le déplacement curviligne permettant la modification.

Le microscope à sonde locale de l'invention peut également être utilisé comme moyen permettant une oxydation ou un dépôt où sous l'action d'un courant électrique les atomes de la pointe vont venir se déposer sur la surface à traiter.

On peut également noter l'utilisation du mode continu curviligne de l'invention dans des applications telles que le nanousinage, le nanopolissage, la nanolithographie ou la tribologie.

**[EXEMPLES]**

L'invention est illustrée à l'aide des exemples qui sont donnés à titre d'illustration uniquement et ne sont pas limitatifs.

Exemple 1 : Influence de la vitesse de glissement sur l'adhésion capillaire

Les forces d'interaction entre une surface d'or et une pointe en $Si_3N_4$ (dont la raideur du cantilever est calibrée par la méthode du bruit thermique) ont été mesurées en mode circulaire avec approche-retrait.

La couche mince d'or a été déposée sur un substrat en verre traité avec une couche mince de titane nécessaire pour favoriser l'adhérence de l'or sur le verre.

Lors de ces mesures, une tension sinusoïdale à la fréquence de 100Hz et à amplitude variable (représentative de la valeur imposée pour la vitesse) a été appliquée aux actionneurs piézoélectriques de la sonde.

La figure 6 représente la déflexion du cantilever en fonction du déplacement Z de l'actionneur piézoélectrique lors de l'approche et du retrait de l'échantillon par rapport à la pointe, pour différentes valeurs d'amplitude de tension et donc différentes valeurs de vitesses de rotation.

La courbe à 0V est représentative de l'état de la technique car elle correspond à une situation où le porte-échantillon et le porte-sonde sont immobiles dans les axes X-Y. Lors du retrait, la pointe s'éloigne de la surface, les forces répulsives produisent une déflexion du cantilever (partie A de la courbe) jusqu'à ce que l'adhésion soit rompue (saut B) et que le cantilever se libère de la surface (partie C) où les forces d'interactions pointe-surface sont nulles.

La discontinuité observée (saut B) est représentative de l'adhésion entre la sonde et l'échantillon englobant la contribution des forces capillaires dues au ménisque lié à l'humidité du milieu environnant (HR>30%).

L'ensemble des autres courbes, à vitesses non nulles fait systématiquement apparaitre une réduction de l'influence de ce phénomène d'autant plus accusée que la vitesse de rotation imposée (ou tension) est élevée.

Exemple 2 : Détermination des coefficients de frottement

Des mesures ont été réalisées à l'aide d'un microscope à force atomique tel que décrit dans l'invention selon un mode circulaire (Ai=A'i ; fréquence identique ; $\varphi=\pi/2$) avec des cycles d'approche-retrait.

Les mesures ont été réalisées à une vitesse de glissement constante égale à 720 $\mu$m/s correspondant à une tension de 8V.

La figure 7a représente les forces normales en fonction du déplacement de l'actionneur selon l'axe Z lors de la mise en contact de la pointe avec la surface lors des cycles.

La figure 7b représente les forces de frottement en fonction du déplacement de l'actionneur selon l'axe Z.

Au cours de ces mesures, l'acquisition des forces de frottement et d'interaction a été réalisée simultanément. Le coefficient directeur partie droite de la figure 7b permet d'accéder directement au coefficient de frottement.

**Revendications**

1. Procédé de mesure par microscopie à force atomique, comprenant les étapes suivantes :

   (a) approcher d'une surface d'un échantillon (1) à analyser une pointe d'une sonde (2) pour microscopie à force atomique ;
   (b) mettre en mouvement relatif continu curviligne uniforme, à une vitesse dérivable en tout point et sans temps d'arrêt tout au long de la mesure, la surface de l'échantillon (1) par rapport à la pointe tout en appliquant à ladite surface un autre mouvement relatif selon l'axe Z, ledit mouvement étant sensiblement normal à la surface de l'échantillon (1);
   (c) détecter les forces d'interaction s'exerçant entre ladite surface à analyser et ladite pointe pour microscopie à force atomique permettant d'accéder aux forces d'adhésion lors du retrait de la pointe vis-à-vis de la surface ou inversement, et aux forces de frottement en fonction des forces normales imposées lors des cycles d'approche-retrait et lorsque la pointe est en contact avec la surface de l'échantillon (1).

2. Procédé de mesure selon la revendication 1, comportant les étapes supplémentaires suivantes :

   - (d) après l'étape c) déplacer la sonde (2) ou le porte-échantillon à une autre coordonnée (x,y) à l'aide d' actionneurs piézoélectriques (3);
   - (e) répéter les étapes a) b) et c)
   - (f) éventuellement répéter les étapes (d) et (e)

3. Procédé de mesure selon l'une des revendications 1 et 2, **caractérisé par le fait que** le mouvement curviligne est un mouvement circulaire.

4. Procédé de mesure selon l'une des revendications 1 à 3, **caractérisé par le fait que** l'échantillon (1) est redressé afin que le mouvement continu curviligne se fasse dans le plan de la surface de l'échantillon (1).

5. Procédé de mesure selon l'une des revendications 1 à 4, **caractérisé par le fait que** la sonde (2) vibre autour de sa fréquence de résonance durant toute la mesure.

6. Microscope à force atomique permettant de mettre en œuvre le procédé selon l'une des revendications 1 à 5 comprenant une sonde (2) constituée d'un cantilever et d'une pointe, ladite sonde étant reliée audit microscope par un porte sonde, un porte-échantillon et des moyens de déplacement (3) permettant le déplacement relatif du porte-échantillon et du porte-sonde, **caractérisé par le fait que** lors de la mesure, ces moyens de déplacement (3) génèrent le mouvement continu relatif curviligne uniforme, à une vitesse dérivable en tout point et sans temps d'arrêt tout au long de la mesure, entre le porte-échantillon et le porte-sonde, ledit microscope à force atomique étant configuré pour détecter les forces d'interaction s'exerçant entre la surface de l'échantillon (1) à analyser et ladite pointe pour microscopie à force atomique permettant d'accéder aux forces d'adhésion lors du retrait de la pointe vis-à-vis de la surface ou inversement, et aux forces de frottement en fonction des forces normales imposées lors des cycles d'approche-retrait et lorsque la pointe est en contact avec la surface de l'échantillon (1).

7. Microscope à force atomique selon la revendication 6, **caractérisé par le fait que** lesdits moyens de déplacement (3) permettent également de générer un mouvement relatif selon l'axe Z entre la pointe et le porte-échantillon, ledit mouvement étant sensiblement normal à la surface libre du porte-échantillon.

8. Microscope à force atomique selon l'une des revendications 6 ou 7, **caractérisé par le fait que** lesdits moyens de déplacement (3) sont les actionneurs piézoélectriques du porte-sonde ou du porte-échantillon.

9. Microscope à force atomique selon l'une des revendications 6 à 8, **caractérisé par le fait que** le mouvement relatif curviligne uniforme est généré par l'application sur les moyens de déplacements de deux tensions harmoniques X et Y composées de tensions sinusoïdales de fréquences f et de ses harmoniques i.f (avec i entier), d'amplitude respectives $A_i$ et $A'_i$, lesdites harmoniques des tensions X et Y étant déphasées d'un angle $\varphi$.

10. Microscope à force atomique selon l'une des revendications 6 à 9 **caractérisé par le fait que** les tensions X, Y sont composées d'une seule harmonique présentant la même amplitude et la même fréquence et sont déphasées l'une par rapport à l'autre d'un angle égal à $\pi/2$.

11. Dispositif permettant la mise en œuvre du microscope à force atomique selon l'une des revendications 6 à 10, qui comprend des moyens configurés pour le contrôle desdits moyens de déplacement (3).

12. Dispositif selon la revendication 11, **caractérisé par le fait qu'**il est directement branché à un microscope à force atomique.

13. Dispositif selon l'une des revendications 11 ou 12, **caractérisé par le fait qu'**il comporte les éléments suivants :

- un ordinateur possédant un logiciel qui permet de générer des tensions sinusoïdales numériques virtuelles (A) ;
- un convertisseur numérique-analogique (B) ;
- éventuellement un inverseur de tension(C) ;
- un module d'accès aux signaux ou tout autre système permettant d'appliquer des tensions électriques aux actionneurs piézoélectriques(D) ;
- un détecteur synchrone (E) ;
- éventuellement une carte de pilotage (F).

14. Application du procédé selon l'une des revendications 1 à 5 pour détecter les forces d'adhésion en fonction de la vitesse de glissement.

15. Application du procédé selon l'une des revendications 1 à 5, pour mesurer des forces de frottement en fonction des forces normales et ainsi déterminer des coefficients de frottement et ceci pour des vitesses de glissement différentes.

16. Application du procédé selon l'une des revendications 2 à 5, pour faire de la cartographie de force d'adhésion ou de force de frottement ou de coefficient de frottement de la surface analysée.

17. Application du procédé selon l'une des revendications 1 à 5, dans les domaines de la métrologie, des sciences des matériaux, de la biologie, de la biochimie, des biotechnologies, des micro-nanotechnologies et de la tribologie.

18. Utilisation du procédé selon l'une des revendications 1 à 5 dans des applications telles que le nanousinage, le nanopolissage, la nanolithographie.

19. Utilisation du microscope à force atomique tel que défini selon l'une des revendications 6 à 13, pour modifier les surfaces par usure.

**Patentansprüche**

1. Messverfahren durch Rasterkraftmikroskopie, das die folgenden Schritte umfasst:

(a) Annähern an eine Oberfläche einer zu analysierenden Probe (1) von einer Spitze einer Sonde (2) für Rasterkraftmikroskopie;
(b) Versetzen der Oberfläche der Probe (1) in eine kontinuierliche krummlinige gleichförmige Relativbewegung, mit einer in jedem Punkt ableitbaren Geschwindigkeit und ohne Haltezeiten während der gesamten Messung, relativ zur Spitze, während eine weitere Relativbewegung auf die Oberfläche entlang der Z-Achse ausgeübt wird, wobei die Bewegung im Wesentlichen normal zu der Oberfläche der Probe (1) ist;
(c) Erfassen der sich ausübenden Wechselwirkungskräfte zwischen der zu analysierenden Oberfläche und der Spitze für Rasterkraftmikroskopie, um auf die Adhäsionskräfte während des Entfernens der Spitze von der Oberfläche oder umgekehrt zugreifen zu können, und auf die Reibungskräfte als Funktion der Normalkräfte, die aufgebracht werden während der Annäherungs-Entfernungs-Zyklen und wenn die Spitze in Kontakt mit der Oberfläche der Probe (1) ist.

2. Messverfahren nach Anspruch 1, umfassend die folgenden zusätzlichen Schritte:

- (d) nach Schritt c) Bewegen der Sonde (2) oder des Probenhalters auf eine andere Koordinate (x, y) unter Verwendung von piezoelektrischen Antrieben (3);
- (e) Wiederholen der Schritte a), b) und c)
- (f) möglicherweise Wiederholen der Schritte (d) und (e) .

3. Messverfahren nach einem der Ansprüche 1 und 2, **dadurch gekennzeichnet, dass** die krummlinige Bewegung eine Kreisbewegung ist.

4. Messverfahren nach einem der Ansprüche 1 bis 3, **dadurch gekennzeichnet, dass** die Probe (1) gerade ausgerichtet wird, so dass die kontinuierliche krummlinige Bewegung in der Ebene der Oberfläche der Probe (1) stattfindet.

5. Messverfahren nach einem der Ansprüche 1 bis 4, **dadurch gekennzeichnet, dass** die Sonde (2) während der gesamten Messung um ihre Resonanzfrequenz schwingt.

6. Rasterkraftmikroskop, das es ermöglicht, das Verfahren gemäß einem der Ansprüche 1 bis 5 umzusetzen, umfassend eine Sonde (2) bestehend aus einem Hebelarm und einer Spitze, wobei die Sonde mit dem Mikroskop durch einen Sondenhalter, einen Probenhalter und Verschiebungsmittel (3), die die Relativbewegung des Probenhalters und des Sondenhalters ermöglichen, verbunden ist, **dadurch gekennzeichnet, dass** diese Verschiebungsmittel (3) während der Messung die relative kontinuierliche krummlinige gleichförmige Bewegung des Probenhalters und des Sondenhalters erzeugen, mit einer in jedem Punkt ableitbaren Geschwindigkeit und ohne Haltezeiten während der gesamten Messung, zwischen dem Probenhalter und dem Sondenhalter, wobei das Rasterkraftmikroskop dafür eingerichtet ist, die Wechselwirkungskräfte zwischen der Oberfläche der zu analysierenden Probe (1) und der Spitze für Rasterkraftmikroskopie zu erfassen, um auf die Adhäsionskräfte während des Entfernens der Spitze von der Oberfläche oder umgekehrt zugreifen zu können, und auf die Reibungskräfte als Funktion der Normalkräfte, die aufgebracht werden während der Annäherungs-Entfernungs-Zyklen und wenn die Spitze in Kontakt mit der Oberfläche der Probe (1) ist.

7. Rasterkraftmikroskop nach Anspruch 6, **dadurch gekennzeichnet, dass** die Verschiebungsmittel (3) auch eine Relativbewegung entlang der Z-Achse zwischen der Spitze und dem Probenhalter erzeugen können, wobei die Bewegung im Wesentlichen normal zu der freien Oberfläche des Probenhalters ist.

8. Rasterkraftmikroskop nach einem der Ansprüche 6 oder 7, **dadurch gekennzeichnet, dass** die Verschiebungsmittel (3) die piezoelektrischen Antriebe des Sondenhalters oder des Probenhalters sind.

9. Rasterkraftmikroskop nach einem der Ansprüche 6 bis 8, **dadurch gekennzeichnet, dass** die krummlinige gleichförmige Relativbewegung durch Anlegen von zwei harmonischen Spannungen X und Y, die aus sinusförmigen Spannungen der Frequenzen f und ihrer Harmonischen i.f (mit i ganzzahlig) der jeweiligen Amplitude $A_i$ und $A'_i$ zusammengesetzt sind, an die Verschiebungsmittel erzeugt wird, wobei die Harmonischen der Spannungen X und Y um einen Winkel φ phasenverschoben sind.

10. Rasterkraftmikroskop nach einem der Ansprüche 6 bis 9, **dadurch gekennzeichnet, dass** die Spannungen X, Y aus einer einzelnen Harmonischen mit der gleichen Amplitude und der gleichen Frequenz bestehen und zueinander um einen Winkel gleich $\pi/2$ phasenverschoben sind.

11. Vorrichtung, die die Verwendung des Rasterkraftmikroskops nach einem der Ansprüche 6 bis 10 ermöglicht, die Mittel umfasst, die zum Steuern der Verschiebungsmittel (3) eingerichtet sind.

12. Vorrichtung nach Anspruch 11, **dadurch gekennzeichnet, dass** sie direkt mit einem Rasterkraftmikroskop verbunden ist.

13. Vorrichtung nach einem der Ansprüche 11 oder 12, **dadurch gekennzeichnet, dass** sie folgende Elemente umfasst:

    - einen Computer mit einer Software, die virtuelle digitale Sinusspannungen erzeugen kann (A);
    - einen Digital-Analog-Wandler (B);
    - möglicherweise einen Spannungsinverter (C);
    - ein Signalzugriffsmodul oder ein anderes System, das es ermöglicht, elektrische Spannungen an die piezoelektrischen Antriebe anzulegen (D);
    - einen Synchrondetektor (E);
    - möglicherweise eine Steuerkarte (F).

14. Anwendung des Verfahrens nach einem der Ansprüche 1 bis 5 zum Erfassen der Adhäsionskräfte als Funktion der Gleitgeschwindigkeit.

15. Anwendung des Verfahrens nach einem der Ansprüche 1 bis 5, zum Messen der Reibungskräfte als Funktion der Normalkräfte und so zum Bestimmen der Reibungskoeffizienten und dies für verschiedene Gleitgeschwindigkeiten.

16. Anwendung des Verfahrens nach einem der Ansprüche 2 bis 5, zum Erstellen einer Kartographie der Adhäsionskraft oder der Reibungskraft oder des Reibungskoeffizienten der analysierten Oberfläche.

17. Anwendung des Verfahrens nach einem der Ansprüche 1 bis 5 auf dem Gebiet der Messtechnik, Materialwissenschaften, der Biologie, der Biochemie, der Biotechnologie, der Mikronanotechnologie und der Tribologie.

18. Verwendung des Verfahrens nach einem der Ansprüche 1 bis 5 in Anwendungen wie der maschinellen Nano-Bearbeitung, der Nanopolitur, der Nanolithographie.

19. Verwendung des Rasterkraftmikroskops gemäß einem der Ansprüche 6 bis 13 zum Verändern der Oberflächen durch Verschleiß.

**Claims**

1. Measurement method by atomic force microscopy, comprising the following steps:

    (a) approaching a surface of a sample (1) to be analyzed with a tip of a probe (2) for atomic force microscopy;
    (b) putting in relative continuous curvilinear uniform movement, at a speed derivable in each point and without stop during the measurement, the surface of the sample (1) relative to the tip while applying another relative movement along the Z-axis, said movement being substantially normal to the surface of the sample (1);
    (c) detecting the interactions forces exerted between said surface to be analyzed and said tip for atomic force microscopy thereby enabling to access the adhesion forces during the removal of the tip from the surface or inversely, and the friction forces as a function of the normal forces imposed during the approach-removal cycles and when the tip is in contact with the surface of the sample (1).

2. Measurement method according to claim 1, comprising the following supplemental steps:

(d) after step c) displacing the probe (2) or the sample holder to another coordinate (x,y) with the help of piezoelectric actuators (3);
(e) repeating steps a), b) and c)
(f) possibly repeating steps (d) and (e).

3. Measurement method according to any one of claims 1 and 2, **characterized in that** the curvilinear movement is a circular movement.

4. Measurement method according to any one of claims 1 to 3, **characterized in that** the sample (1) is adjusted in order for the continuous curvilinear movement to be done in the plane of the surface of the sample (1).

5. Measurement method according to any one of claims 1 to 4, **characterized in that** the probe (2) vibrates around its resonance frequency during the whole measurement.

6. Atomic force microscope allowing for the implementation of the method according to any one of claims 1-5, comprising a probe (2) consisting of a cantilever and a tip, said probe being linked to the microscope via a probe holder, a sample holder and displacement means (3) allowing for the relative displacement of the sample holder and the probe holder, **characterized in that** during the measurement, these displacement means (3) generate the relative continuous curvilinear uniform movement, at a speed derivable in each point and without stop during the measurement, between the sample holder and the probe holder, said atomic force microscope being configured to detect the interaction forces exerted between the surface of the sample (1) to be analyzed and said tip for atomic force microscopy thereby enabling to access the adhesion forces during the removal of the tip from the surface or inversely, and the friction forces as a function of the normal forces imposed during the approach-removal cycles and when the tip is in contact with the surface of the sample (1).

7. Atomic force microscope according to claim 6, **characterized in that** said displacement means (3) also allow for generating a relative movement along the Z-axis between the tip and the sample holder, said movement being substantially normal to the free surface of the sample holder.

8. Atomic force microscope according to any of claims 6 or 7, **characterized in that** said displacement means (3) are the piezoelectric actuators of the probe holder or the sample holder.

9. Atomic force microscope according to any one of claims 6 to 8, **characterized in that** the relative curvilinear uniform movement is generated by the application to the displacement means of two harmonic tensions X and Y composed of sinusoid tensions of frequency f and of its harmonics i.f (with i integer), of respective amplitudes $A_i$ and $A'_i$, said harmonics of tensions X and Y being phase-shifted by an angle $\varphi$.

10. Atomic force microscope according to any one of claims 6 to 9, **characterized in that** the tensions X, Y are composed of a single harmonic presenting the same amplitude and the same frequency and are phase-shifted one from the other by an angle equal to $\pi/2$.

11. Device allowing for the implementation of the atomic force microscope according to any one of claims 6 to 10, which comprises means configured for controlling said displacement means (3).

12. Device according to claim 11, **characterized in that** it is directly connected to an atomic force microscope.

13. Device according to any one of claims 11 or 12, **characterized in that** it comprises the following elements:

- a computer comprising a software that enables the generation of virtual digital sinusoid tensions (A);
- a digital-to-analog converter (B);
- possibly a tension inverter (C);
- a module for accessing to the signals or any other system allowing for the application of electrical tensions to the piezoelectric actuators (D);
- a synchronous detector (E);
- possibly a control card (F).

14. Application of the method according to any one of claims 1 to 5, for detecting the adhesion forces as a function of the sliding speed.

15. Application of the method according to any one of claims 1 to 5, for measuring friction forces as a function of the normal forces and thereby determining friction coefficients and this for different sliding speeds.

16. Application of the method according to any one of claims 2 to 5, for doing adhesion force or friction force or friction coefficient mapping of the analyzed surface.

17. Application of the method according to any one of claims 1 to 5, in the fields of metrology, material sciences, biology, biochemistry, biotechnologies, micro-nanotechnologies and tribology.

18. Use of the method according to any one of claims 1 to 5 in applications like nanotooling, nanopolishing, nanolithography.

19. Use of the atomic force microscope as defined in any one of claims 6 to 13, for modifying the surfaces by wear.

Figure 1

Figure 2a

Figure 2b

Figure 2c

Figure 3a

Figure 3b

Figure 3c

Figures 4a

Figure 4b

Figure 4c

Figure 5

Déplacement de l'actionneur piézoélectrique (nm)

Figure 6

Figure 7a

Figure 7b

Figure 8

## RÉFÉRENCES CITÉES DANS LA DESCRIPTION

**Documents brevets cités dans la description**

- US 6169281 B1
- EP 0674170 A1
- US 2007272005 A1
- JP 3226649 B

**Littérature non-brevet citée dans la description**

- **BINNIG.** *Phys.Lett.,* 1986, vol. 56 (9), 930
- Normal and latéral modulation with a scanning force microscope, an analysis: Implication in quantitative elastic and friction imaging. **MAZERAN P-E et al.** TRIBOLOGY LETTERS. BALTZER SCIENCE PUBLISHIERS, 01 Janvier 1999, vol. 7, 199-212